Europäisches Patentamt

European Patent Office

Office européen des brevets

(11) Publication number : **0 679 704 A1**

# (12) EUROPEAN PATENT APPLICATION

(21) Application number : **95302867.7**

(22) Date of filing : **27.04.95**

(51) Int. Cl.⁶ : **C09D 123/04**

(30) Priority : **27.04.94 JP 89672/94**

(43) Date of publication of application :
**02.11.95 Bulletin 95/44**

(84) Designated Contracting States :
**DE FR GB**

(71) Applicant : **SUMITOMO CHEMICAL
COMPANY, LIMITED
5-33, Kitahama 4-chome
Chuo-ku
Osaka (JP)**

(72) Inventor : **Nezu, Syoichi
14-35-2, Kurosuna-2-chome,
Inage-ku
Chiba-shi (JP)**
Inventor : **Kubo, Kohji
9-824, Yushudainishi-1-chome
Ichihara-shi (JP)**

(74) Representative : **Woods, Geoffrey Corlett
J.A. KEMP & CO.
14 South Square
Gray's Inn
London WC1R 5LX (GB)**

(54) **A method of coating a steel with a resin composition and a laminated article obtained by said method.**

(57)    A method of coating steel is disclosed, which method comprises applying to the steel a resin composition comprising :

(A) 55 to 90% by weight of a high-pressure low density polyethylene which has a melt flow rate determined at 190°C under a load of 2.16 kg of 0.1 to 3.0 g/10 min. and a density of from 0.915 g/cm³ to 0.930 g/cm³, and

(B) 45 to 10% by weight of an ethylene-α-olefin copolymer which has a melt flow rate determined at 190°C under a load of 2.16 kg of 0.5 to 10.0 g/10 min., a density of 0.895 to 0.920 g/cm³, and has only one endothermic peak as determined with DSC, and the temperature of the top of said endothermic peak falls within the range of 70 to 115°C, and in which the endotherm in the temperature range of 70 to 115°C is 90% or more to the total endotherm. A laminate comprising a steel substrate coated by the method of the invention has excellent corrosion resistance, abrasion resistance, chemical resistance and processability, a laminated surface with low stickiness and high hardness, and improved impact strength at low temperatures.

EP 0 679 704 A1

## FIELD OF THE INVENTION

The present invention relates to a method of coating a steel with a resin composition and a laminated article obtained by said method. In more particular, it relates to a method of coating a steel with a resin composition and a laminated article comprising a steel and said resin compostion, which is good in corrosion resistance, abrasion resistance, chemical resistance and processability, gives a coating surface with a low stickiness and high hardness, and has a remarkably improved impact strength at low temperatures.

## BACKGROUND OF THE INVENTION

Steel pipes used for transporting natural gas, crude oil, and the like are coated, before use, with polyolefin resins for the purpose of corrosion prevention and protection from external environment. The polyolefin resins used as the corrosion resistant protective layer include high-pressure low density polyethylene, linear low density polyethylene, medium density polyethylene and ethylene-vinyl acetate copolymer, but all of these polymers have the drawback of lowering the impact resistance at low temperatures of -45°C or below. In recent years, the mining areas of natural gas and crude oil have been extended to Alaska, Siberia or further northern polar regions in addition to the previous high temperature regions as the Middle East. Accordingly, the storage, transportation and burying operations of steel pipes have come to be more frequently conducted at extremely low temperatures of -45°C or below and further -60°C or below. When an impact force is applied to the protective coating layer of pipes at such low temperatures to propagate cracks, it may possibly cause the corrosion of steel pipes to be aggravated from the cracked parts. This gives a serious problem regarding the safe transportation of natural gas and crude oil.

For improving the low temperature impact strength of such protective coating, it has already been proposed to use a specific ethylene-vinyl acetate copolymer (JP-B-62-9138) or to use a specific ethylene-α-olefin copolymer (JP-B-2-8605). Both of these patents, however, do not refer to the impact strength with notched test pieces, which is an index for resistance to impactive destructive force at the aforesaid extremely low temperatures; further they give no consideration to the use of the copolymers in an environment of -45°C or below.

## SUMMARY AND OBJECT OF THE INVENTION

The object of the present invention is to provide a method of coating a steel with a resin composition and a laminated article comprising a steel and said resin composition, which is good in abrasion resistance, chemical resistance and processability, gives a coating surface with low stickiness and high hardness, and has a remarkably improved impact resistance at low temperatures.

Thus, according to the present invention, there are provided a method of coating a steel with a resin composition which is characterized by using said resin composition comprising:

(A) 55 to 90% by weight of a high-pressure low density polyethylene which has a melt flow rate determined at 190°C under a load of 2.16 kg of 0.1 to 3.0 g/10 min. and a density of 0.915 g/cm³ or more and less than 0.930 g/cm³, and

(B) 45 to 10% by weight of an ethylene-α-olefin copolymer which has a melt flow rate determined at 190°C under a load of 2.16 kg of 0.5 to 10.0 g/min., a density of 0.895 to 0.920 g/cm³, and has only one endothermic peak as determined with DSC, and the temperature of the top of said endothermic peak falls within the range of 70 to 115°C, and in which the endotherm in the temperature range of 70 to 115°C is 90% or more to the total endotherm; a use of the composition as mentioned above; and a commercial package containing the composition as mentioned above together with instructions for the use thereof to coat steel materials.

There are also provided a laminated article comprising a steel and said resin compostion.

## DETAILED DESCRIPTION OF THE INVENTION

The component (A) used in the present invention is a high-pressure low density polyethylene which has a melt flow rate determined at 190°C of under a load of 2.16 kg of 0.1 to 3.0 g/10 min. and a density of 0.915 g/cm³ or more and less than 0.930 g/cm³.

The high-pressure low density polyethylene is a polymer obtained by radical polymerization of ethylene, or ethylene containing a small amount (about 5% by weight or less) of a vinyl ester such as vinyl acetate, acrylic ester, etc., as a comonomer, using a free radical generating agent such as organic peroxides, oxygen, etc., as a radical initiator, and under conditions of a polymerization temperature of about 130 to 300°C and a polymerization pressure of about 500 to 3000 kg/cm².

The melt flow rate of the component (A) determined at 190°C under a load of 2.16 kg falls within the range of from 0.1 to 3.0 g/10 min., preferably 0.15 to 1.0 g/10 min. The melt flow rate is determined according to JIS K6760. When the melt flow rate is too low, the processability of the resulting resin composition is poor because the torque required at the time of extrusion is high. One the other hand, when the melt flow rate is too high, the impact strength at low temperatures is low.

The density of the component (A) falls within the range of 0.915 g/cm$^3$ or more and less than 0.930 g/cm$^3$, preferably 0.918 to 0.925 g/cm$^3$. The density is determined at 23°C according to JIS K6760. When the density is too low, the abrasion resistance and chemical resistance of the resulting resin composition are poor, whereas when the density is too high, the impact strength at low temperatures is remarkably low.

The component (B) used in the present invention is an ethylene-α-olefin copolymer which has a melt flow rate determined at 190°C under a load of 2.16 kg of 0.5 to 10 g/10 min. and a density of 0.895 to 0.920 g/cm$^3$, has only one endothermic peak as determined with DSC (Differential Scanning Calorimetry), and the temperature of the top of said endothermic peak falls within the range of 70 to 115°C, and in which the endotherm in the temperature range of 70 to 115°C is 90% or more to the total endotherm.

The component (B) is generally a polymer obtained by an ionic polymerization of ethylene with an-α-olefin in the presence of a solvent, or in a gas-solid phase, a liquid-solid phase or a homogeneous liquid phase, using a Ziegler type catalyst or a metallocene type catalyst, and under conditions of a polymerization temperature of about 30 to 300°C and a polymerization pressure of approximately from atmospheric pressure to 3000 kg/cm$^2$. The Ziegler type catalyst used includes, for example, a complex catalyst comprising a vanadium compound and an organoaluminum compound. Said vanadium compound includes, vanadium trichloride; vanadium tetrachloride; a compound expressed by a general formula VO(OR)$_n$X$_{3-n}$ (wherein R represents a hydrocarbon group, X represents a halogen and $0 \leqq n \leqq 3$), such as VOCl$_3$, VO(OCH$_3$)Cl$_2$, VO(OCH$_3$)$_2$Cl, VO(OCH$_3$)$_3$, VO(OC$_2$H$_5$)Cl$_2$, VO(OC$_2$H$_5$)$_2$Cl, VO(OC$_2$H$_5$ )$_3$, VO(OC$_3$H$_7$)Cl$_2$, VO(OC$_3$H$_7$)$_2$Cl, VO(OC$_3$H$_7$)$_3$, VO(O-iso-C$_3$H$_7$)Cl$_2$, VO(O-iso-C$_3$H$_7$)$_2$Cl and VO(O-iso-C$_3$H$_7$)$_3$; and a mixture thereof. The metallocene type catalyst used includes a system comprising a combination of a compound containing a transition metal such as zirconium, titanium, hafnium, vanadium, etc. and having a specific structure with an organoaluminum compound.

Specific examples of the α-olefin include propylene, butene-1, 4-methylpentene-1, hexene-1, octene-1 and decene-1. The α-olefins having 4 to 10 carbon atoms are preferred. These α-olefins may be used each alone or in a combination of two or more thereof. The content of α-olefin in the ethylene-α-olefin copolymer of the component (B) preferably falls within the range of 2 to 10% by mole. Further, mixtures of two or more kinds of ethylene-α-olefin copolymers containing different α-olefins may also be used.

The melt flow rate of the component (B) determined at 190°C under a load of 2.16 kg falls within the range of from 0.5 to 10.0 g/10 min., preferably 1.5 to 7.0 g/10 min, more preferably 2.0 to 7.0 g/10 min. The melt flow rate is determined according to JIS K 6760. When the melt flow rate is too low, the processability of the resulting resin composition is poor because the torque required at the time of extrusion is high. When the melt flow rate is too high, the impact strength at low temperatures is low.

The density of the component (B) falls within the range of from 0.895 to 0.920 g/cm$^3$, preferably 0.895 to 0.915 g/cm$^3$, more preferably 0.900 to 0.915. When the density is too low, the resulting resin composition is poor in abrasion resistance and chemical resistance and, further, stickiness develops on the surface of the coating layer. When the density is too high, the impact strength at low temperatures is low.

The component (B) is a copolymer which has only one endothermic peak as determined with DSC, and the temperature of the top of said endothermic peak falls within the range of 70 to 115°C, and in which the endotherm in the temperature range of 70 to 115°C is 90% or more to the total endotherm. Only by using the copolymer having such a characteristic endothermic peak, the improvement of impact strength at low temperatures, which is an object of the present invention, can be attained.

The resin composition for coating steel materials used in the present invention comprises 55 to 90% by weight, preferably 65 to 80% by weight, of the component (A) and 45 to 10% by weight, preferably 35 to 20% by weight, of the component (B). When the proportion of the component (A) is too small (that is, the proportion of the component (B) is too large), the torque required at the time of coating operation is high and the melt tension of the resin composition is low, resulting in poor processability. When the proportion of the component (A) is too large (that is, the proportion of the component (B) is too small), the improvement of impact strength at low temperatures, particularly impact strength with notched test pieces, cannot be attained. The low temperature impact strength with notched test pieces is defined by presuming the development of cracks and their propagation in the coating layer caused by the collision of steel pipes with one another or with sharp edged rocks at low temperatures that will occur during the actual operations of transportation, storage and burying of steel pipes.

The resin composition used in the present invention may be obtained by uniformly melt-kneading the component (A) and the component (B). The resin composition may further be incorporated, as long as the object of the present invention is attained, with other conventional compounding ingredients, for example, antioxidants, neutralizing agents, ultraviolet absorbents, internal lubricants, pigments, flame retardants, and inorganic or organic fillers.

The resin composition is used for coating steel materials in the present invention. The steel materials herein refer to steel pipes, steel sheets, and like products.

In the present invention, the method of coating the steel with the resin composition is exemplified, for example, as follows.

The method for protecting steel pipes for pipelines from a corrosion includes a method of coating a steel pipe with a coating layer (a resin composition) comprising the steps of:

(1) coating a preheated steel pipe with an adhesive layer to form an adhesive-coated steel pipe,

(2) helically winding a sheet of a resin composition immediately after extruded from an extruder around the adhesive-coated steel pipe to obtain a coated steel pipe with the resin composition, and

(3) cooling the thus obtained coated steel pipe having a coating layer of the resin composition to solidify the coating layer.

The adhesive layer in the above-mentioned step (1) includes an adhesive agent and an adhesive resin such as a resin containing an epoxy group and/or an acid anhydride.

Said method provides a mean for protecting a steel pipe from a corrosion.

The laminated article comprising the steel and the resin composition, namely the coated pipes obtained by said method, is superior in corrosion prevention effect and in durability, therefore, the laminated article is expected to have various uses.

The present invention is described in detail below with reference to Examples.

## EXAMPLES

### Example 1

A mixture of 85% by weight of a high-pressure low density polyethylene (Sumikathen G109, a trade name, mfd. by Sumitomo Chemical Co, Ltd.), produced by radical polymerization and having a melt flow rate at 190°C of 0.22 g /10 min., and a density of 0.923 g/cm$^3$, and 15% by weight of an ethylene-butene-1 copolymer (Esprene SPO N0355, a trade name, mfd. by Sumitomo Chemical Co., Ltd.) produced by ionic polymerization and having a melt flow rate at 190°C of 5.0 g/10 min., and a density of 0.905 g/cm$^3$ was kneaded and pelletized through a single screw extruder of 30 mm in diameter. The pelletized resin composition thus obtained was evaluated for various properties by the following methods.

Esprene SPO NO355 had only one endothermic peak as determined with DSC, and the temperature of the top of said endothermic peak was at 95°C, and the endotherm of the peak in the temperature range of 70 to 115°C being 98% to the total endotherm of the copolymer. The DSC endothermic peak and endotherm were determined according to JIS K7121, article 3-(2), using a Perkin-Elmer Type 7 DSC, and further based on JIS K7122.

The results of evaluation thus obtained are shown in Table 1.

(1) Low temperature impact strength (with notched test piece) A notched, rectangular test piece (9.53 mm in length and 63.5 mm in width) having a 45-degree V-shaped notch on the upper side of the center of the width of the rectangle (the lowermost point of the V shaped notch being positioned 5.0 mm apart from the lower side of the center of the width of the rectangle) was used. The test piece was prepared by punching out of a pressed sheet of 1 mm in thickness. The impact strength was determined at -60°C with a pendulum type tensile impact tester manufactured by Toyo Seiki Co.

(2) Torque (an index of processability) By using a Brabender plasticoder (mfd. by Brabender Co.), the torque after 30 minutes at 160°C and 60 rpm was determined. The amount of the charged sample was 40 g. The sample had been incorporated with 0.2% by weight of Sumilizer WXR (mfd. by Sumitomo Chemical Co., Ltd.) as an antioxidant.

(3) Melt tension (an index of process-ability) The melt tension at 190°C was determined by using a melt tension tester manufactured by Toyo Seiki Co.

(4) Surface hardness The Shore D hardness at 23°C was determined according to ASTM D2240-79, by using a surface hardness tester manufactured by Ueshima Seisakusho.

(5) Surface stickiness A sheet press-molded into 1 mm thickness was heated at 40°C for 2 hours and then the stickiness of the surface was evaluated by finger touch. The result was expressed by ○ (not sticky) or × (sticky).
(6) Dynamic penetration test A press sheet of a resin composition having a thickness of 2.5 mm was adhered to an acid-washed steel board having a thickness of 2 mm at 250°C by the use of an adhesive resin film (A trade name is "Bondfast 7B" manufactured by Sumitomo Chemical Co., Ltd.) so that the press sheet covered a surface of the steel board. The press sheet-covered steel board was dipped in a hot water at 60°C for 1 hour. Immediately after taking the press sheet-covered steel board out of the hot water, a weight of 1 kg was dropped from a height of 1 m on a punch having an edge diameter of 15.9 mm applied to the surface of the press sheet. The depth in which the punch cut into the press sheet was determined. The smaller the depth, the better the scratch resistance at high temperature.
(7) Holiday Test It was determined by KA8613 spot pinhole tester (manufactured by Sanyu Denshi Corp.) whether fine holidays (defect: broken parts of the coated layer) were formed or not in the deformed parts of the resin composition formed by the drop of the weight as described in section (6) above. A voltage of 10 kV was applied between the resin composition and the steel board, and it was determined whether holidays exist or not by observing electric currents between the surface of the resin composition and the steel board.

Example 2 and Comparative Examples 1-7

The same procedures as in Example 1 were repeated except that the components (A) and (B) having the conditions shown in Tables 1 to 3 were used. The results of evaluation thus obtained are shown in Tables 1 to 3.

The results shown in Tables 1 to 3 reveal the following: The resin compositions of Example 1 and 2, which meet the essential conditions of the present invention, exhibited satisfactory results in all of the evaluations shown in the Table 1. On the other hand, the resin composition of Comparative Example 1, wherein the proportion of the component (B) is too small (that is, the proportion of the component (A) is too large), that of Comparative Example 2, which has two endothermic peaks as determined with DSC and has the endotherm in the temperature range of 70 to 115°C being much less of the total endotherm, that of Comparative Example 3, in which an ethylene-vinyl acetate resin as the component (B) was used, and that of Comparative Example 4, wherein the component (A) has an excessively high melt flow rate, were poor in low temperature impact strength. The composition of Comparative Example 5, wherein the density of the component (B) is too low, developed stickiness on the surface.

And Comparative Examples 4 and 5 were also poor in dynamic penetration test and Holiday test. The composition of Comparative Examples 6 and 7, wherein the proportion of the component (A) is too small (that is, the proportion of the component (B) is too large), were poor in melt tension and dynamic penetration test. And Comparative Example 6 is also poor in surface stickness and Holiday test.

Table 1

| | Examples | | Comparative Examples | |
|---|---|---|---|---|
| | 1 | 2 | 1 | 2 |
| **Component (A)** | | | | |
| Kind *1) | A1 | A1 | A1 | A1 |
| MFR (g/10 min) *2) | 0.22 | 0.22 | 0.22 | 0.22 |
| Density (g/cm$^3$) | 0.923 | 0.923 | 0.923 | 0.923 |
| Content (wt%) | 85 | 70 | 95 | 70 |
| **Component (B)** | | | | |
| Kind *3) | B1 | B2 | B1 | B3 |
| MFR (g/10 min) *2) | 5.0 | 1.7 | 5.0 | 2.0 |
| Density (g/cm$^3$) | 0.905 | 0.915 | 0.905 | 0.912 |
| DSC peak *4) | | | | |
|     Number of peaks | 1 | 1 | 1 | 2 |
|     Top temperature of the endothermic peak (°C) | 95 | 109 | 95 | 97,118 |
|     Ratio of endotherm in 70 to 115°C to the total endotherm (%) | 98 | 98 | 98 | 70 |
| Content (wt%) | 15 | 30 | 5 | 30 |
| **Evaluation results** | | | | |
| Low temp. impact strength (kg·cm/cm$^2$) | 88 | 109 | 2 | 9 |
| Torque (g·m) | 2480 | 2600 | 2380 | 2400 |
| Melt tension (g) | 8.0 | 6.0 | 9.5 | 6.5 |
| Surface hardness | 53 | 56 | 53 | 53 |
| Surface stickiness | ○ | ○ | ○ | ○ |

Table 1 (cont'd)

| | | | | |
|---|---|---|---|---|
| Dynamic penetration test (mm) | 1.68 | 1.70 | 1.66 | 1.75 |
| Holiday test (electric current) | not ob-served | not ob-served | not ob-served | not ob-served |

Table 2

| | Comparative Examples | | |
|---|---|---|---|
| | 3 | 4 | 5 |
| Component (A) | | | |
|    Kind *1) | A1 | A2 | A1 |
|    MFR (g/10 min) *2) | 0.22 | 5.0 | 0.22 |
|    Density (g/cm³) | 0.923 | 0.924 | 0.923 |
|    Content (wt%) | 70 | 70 | 70 |
| Component (B) | | | |
|    Kind *3) | B4 | B5 | B6 |
|    MFR (g/10 min) *2) | 3.0 | 2.0 | 7.0 |
|    Density (g/cm³) | 0.950 | 0.905 | 0.870 |
|    DSC peak *4) | | | |
|      Number of peaks | 1 | 1 | 1 |
|      Top temperature of the endothermic peak | 78 | 94 | 60 |
|      Ratio of endotherm in 70 to 115°C to the total endotherm (%) | 90 | 98 | 20 |
|    Content (wt%) | 30 | 30 | 30 |
| Evaluation results | | | |
|    Low temp. impact strength (kg·cm/cm²) | 2 | 3 | 39 |
|    Torque (g·m) | 2150 | 1300 | 1980 |
|    Melt tension (g) | 12.5 | 3.2 | 10.1 |
|    Surface hardness (Shore D) | 49 | 54 | 43 |
|    Surface stickiness | ○ | ○ | × |

Table 2 (cont'd)

| | | | |
|---|---|---|---|
| Dynamic penetration test (mm) | 1.60 | 2.30 | 2.40 |
| Holiday test (electric current) | not observed | observed | observed |

Table 3

| | Comparative Examples | |
|---|---|---|
| | 6 | 7 |
| Component (A) | | |
| Kind *1) | A1 | A1 |
| MFR (g/10 min) *2) | 0.22 | 0.22 |
| Density (g/cm$^3$) | 0.923 | 0.923 |
| Content (wt%) | 15 | 30 |
| Component (B) | | |
| Kind *3) | B1 | B2 |
| MFR (g/10 min) *2) | 5.0 | 1.7 |
| Density (g/cm$^3$) | 0.905 | 0.915 |
| DSC peak *4) | | |
| Number of peaks | 1 | 1 |
| Top temperature of the endothermic peak (°C) | 95 | 109 |
| Ratio of endotherm in 70 to 115°C to the total endotherm (%) | 98 | 98 |
| Content (wt%) | 85 | 70 |
| Evaluation results | | |
| Low temp. impact strength (kg•cm/cm$^2$) | >200 | >200 |
| Torque (g•m) | 1580 | 2800 |
| Melt tension (g) | 1.5 | 2.8 |
| Surface hardness | 40 | 49 |
| Surface stickiness | ✕ | ◯ |

Table 3 (cont'd)

| | | |
|---|---|---|
| Dynamic penetration test (mm) | 2.50 | 2.00 |
| Holiday test (electric current) | ob-served | not ob-served |

Note:

*1)   Kind of component (A)

A1:   High-pressure low density polyethylene (Sumikathen G109, a trade name, mfd. by Sumitomo Chemical Co., Ltd.)

A2:   High-pressure low density polyethylene (Sumikathen F411-0, a trade name, mfd. by Sumitomo Chemical Co., Ltd.)

*2)   MFR:   Melt flow rate determined at 190°C under a load of 2.16 kg

*3)   Kind of component (B)

B1:   Ethylene-butene-1 copolymer (Esprene SPO NO355, a trade name, mfd. by Sumitomo Chemical Co., Ltd., produced by ionic polymerization)

B2:   Ethylene-butene-1 copolymer (produced by slurry polymerization using a catalyst comprising a zirconium compound having a cyclopentadienyl group and methylaluminoxane)

B3:   Ethylene-hexene-1 copolymer (Sumikathen Alpha FZ201-0, a trade name, mfd. by Sumitomo Chemical Co., Ltd., produced by ionic polymerization)

B4: Ethylene-vinyl acetate copolymer (Evatate K2010, a trade name, vinyl acetate content of 25% by weight, mfd. by Sumitomo Chemical Co., Ltd., produced by radical polymerization)

B5: Ethylene-butene-1 copolymer (Esprene SPO N0352, a trade name, mfd. by Sumitomo Chemical Co., Ltd., produced by ionic polymerization)

B6: Ethylene-butene-1 copolymer (Esprene SPO N0416, a trade name, mfd. by Sumitomo Chemical Co., Ltd., produced by ionic polymerization)

*4) DSC peak

Top Temperature: The temperature of the top of the endothermic peak as determined with DSC

Ratio of endotherm: The ratio of endotherm in the temperature range of 70 to 115°C to the total endotherm

As set forth above, according to the present invention, a method of coating a steel with a resin composition and a laminated article comprising a steel and said resin composition can be provided. Said laminated article is good in corrosion resistance, abrasion resistance, chemical resistance and processability, gives a coating surface with a low stickiness and a high hardness, and has a remarkably improved impact strength at low temperatures.

## Claims

1. A method of coating steel, which method comprises applying to the steel a resin composition comprising:
   (A) 55 to 90% by weight of a high-pressure low density polyethylene which has a melt flow rate determined at 190°C under a load of 2.16 kg of 0.1 to 3.0 g/10 min. and a density of from 0.915 g/cm³ to 0.930 g/cm³, and
   (B) 45 to 10% by weight of an ethylene-α-olefin copolymer which has a melt flow rate determined at 190°C under a load of 2.16 kg of 0.5 to 10.0 g/10 min., a density of 0.895 to 0.920 g/cm³, and has only one endothermic peak as determined with DSC, and the temperature of the top of said endothermic peak falls within the range of 70 to 115°C, and in which the endotherm in the temperature range of 70 to 115°C is 90% or more to the total endotherm.

2. A method according to claim 1, wherein the resin composition comprises from 65 to 80% by weight of the high-pressure low density polyethylene (A) and from 35 to 20% by weight of the ethylene-α-olefin copolymer (B).

3. A method according to claim 1 or 2, wherein the melt flow rate of the high-pressure low density polyethylene (A) is from 0.15 to 1.0 g/10 min.

4. A method according to any one of the preceding claims, wherein the density of the high-pressure low density polyethylene (A) is from 0.918 to 0.925 g/cm³.

5. A method according to any one of the preceding claims, wherein the high-pressure low density polyethylene (A) is an ethylene homopolymer or a copolymer of ethylene with at least one vinyl ester.

6. A method according to claim 5, wherein the high-pressure low density polyethylene (A) is a copolymer of ethylene with at least one vinyl ester having a vinyl ester content in the copolymer of 5% by weight or less.

7. A method according to any one of the preceding claims, wherein the melt flow rate of the ethylene-α-olefin copolymer (B) is from 1.5 to 7.0 g/10 min.

8. A method according to any one of the preceding claims, wherein the density of the ethylene-α-olefin copolymer (B) is from 0.895 to 0.915 g/cm³.

9. A method according to any one of the preceding claims, wherein the α-olefin of the ethylene-α-olefin copolymer (B) is at least one α-olefin having from 4 to 10 carbon atoms.

10. A method according to any one of the preceding claims, wherein the α-olefin content of the ethylene-α-olefin copolymer (B) is from 2 to 10% by mole.

11. A laminate which comprises a steel substrate and, coated thereon, a resin composition comprising:
(A) 55 to 90% by weight of a high-pressure low density polyethylene which has a melt flow rate determined at 190°C under a load of 2.16 kg of 0.1 to 3.0 g/10 min. and a density of from 0.915 g/cm³ to 0.930 g/cm³, and
(B) 45 to 10% by weight of an ethylene-α-olefin copolymer which has a melt flow rate determined at 190°C under a load of 2.16 kg of 0.5 to 10.0 g/10 min., a density of 0.895 to 0.920 g/cm³, and has only one endothermic peak as determined with DSC, and the temperature of the top of said endothermic peak falls within the range of 70 to 115°C, and in which the endotherm in the temperature range of 70 to 115°C is 90% or more to the total endotherm.

12. A laminate according to claim 11, wherein the resin composition comprises from 65 to 80% by weight of the high-pressure low density polyethylene (A) and from 35 to 20% by weight of the ethylene-α-olefin copolymer (B).

13. A laminate according to claim 11 or 12, wherein the melt flow rate of the high-pressure low density polyethylene (A) is from 0.15 to 1.0 g/10 min.

14. A laminate according to any one of claims 11 to 13, wherein the density of the high-pressure low density polyethylene (A) is from 0.918 to 0.925 g/cm³.

15. A laminate according to any one of claims 11 to 14, wherein the high-pressure low density polyethylene (A) is an ethylene homopolymer or a copolymer of ethylene with at least one vinyl ester.

16. A laminate according to claim 15, wherein the high-pressure low density polyethylene (A) is a copolymer of ethylene with at least one vinyl ester having a vinyl ester content in the copolymer of 5% by weight or less.

17. A laminate according to any one of claims 11 to 16, wherein the melt flow rate of the ethylene-α-olefin copolymer (B) is from 1.5 to 7.0 g/10 min.

18. A laminate according to any one of claims 11 to 17, wherein the density of the ethylene-α-olefin copolymer (B) is from 0.895 to 0.915 g/cm³.

19. A laminate according to any one of claims 11 to 18, wherein the α-olefin of the ethylene-α-olefin copolymer (B) is at least one α-olefin having from 4 to 10 carbon atoms.

20. A laminate according to any one of claims 11 to 19, wherein an α-olefin content in the ethylene-α-olefin

copolymer (B) is from 2 to 10% by mole.

21. A laminate according to any one of claims 11 to 20, wherein the substrate is a steel pipe.

**European Patent Office**

## EUROPEAN SEARCH REPORT

Application Number

EP 95 30 2867

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 575 123 (MITSUI PETROCHEMICAL)<br>* page 45, line 17 - page 47, line 17; table I * | 1-21 | C09D123/04 |
| A | WO-A-830 490 (EASTMAN KODAK)<br>* page 2, line 3 - line 11 *<br>* page 2, line 25 - page 3, line 4 *<br>* page 7, line 3 - line 9 * | 1-21 | |
| A | DATABASE WPI<br>Derwent Publications Ltd., London, GB;<br>AN 82-12831e<br>& JP-A-57 003 805 (MITSUI PETROCHEMICAL),<br>9 January 1982<br>* abstract * | 1-21 | |
| | | | TECHNICAL FIELDS SEARCHED (Int.Cl.6)<br><br>C09D<br>C08L |

The present search report has been drawn up for all claims

| Place of search | Date of completion of the search | Examiner |
|---|---|---|
| THE HAGUE | 10 July 1995 | Schmidt, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)